# DEMANDE DE BREVET EUROPEEN

(11) **EP 1 343 283 A2**
(43) Date de publication de la demande: **10.09.2003**
(21) Numéro de dépôt: 03290207.4
(22) Date de dépôt: 28.01.2003
(51) Int. Cl.: H04L 12/56

(54) **Contrôle d'admission à un réseau de données pour l'assurance de la qualité de service**

(30) Priorité: 14.02.2002 FR 0201847
(71) Demandeur: ALCATEL, 75008 Paris (FR)
(72) Inventeur: Couturier, Alban, 92320 Chatillon (FR)
(74) Mandataire: Chaffraix, Sylvain

(57) **Abrégé**

Contrôle d'admission de microflux à un réseau de données consistant à affecter des niveaux de priorité logique à ces microflux, permettant de mettre en oeuvre un ordre de préemption de microflux basé sur cette priorité logique. Si la qualité de service requise pour un nouveau microflux A ne peut être assurée par les ressources internes du réseau, on peut alors libérer des ressources internes du réseau par préemption d'un microflux B de priorité logique plus basse.

## Description

La présente invention concerne la gestion de la qualité de service sur un réseau de données. Elle s'applique tout particulièrement aux réseaux de données permettant la fourniture de différents services, comme la transmission de la voix, de données, vidéo, etc. Un tel réseau peut par exemple être un réseau basé sur les protocoles de la famille TCP/IP (*Transport Control Protocol* / *Internet Protocol*), c'est à dire du type communément appelé Internet.

Certains services nécessitent une réservation expresse de ressources au sein du réseau. En effet, certains réseaux, tels Internet, ont été prévus pour transmettre des données, mais ni de la voix, ni de la vidéo. Au sein d'lnternet, les transmissions de données sont effectuées sous la forme de paquets, chaque paquet étant acheminé vers sa destination indépendamment des autres paquets. Chaque paquet est classiquement identifié par un entête IP, un 5-tuple : protocole utilisé, adresse et port de l'émetteur, adresse et port du destinataire. L'entête Ip peut comprendre d'autres informations plus spécifiques, concernant le paquet lui-même (longueur).

On entend habituellement par microflux, un ensemble de paquets qui ont le même 5-tuple ou au moins le même 4-tuple. En effet, l'entête IP peut ne pas comporter l'identification du port de l'émetteur. Dans la suite, le terme microflux englobe ces deux possibilités. On entend par flux, un ensemble de paquets ou de microflux qui ont au moins un paramètre commun de l'entête IP.

Pour transmettre des flux de paquets correspondant à de la voix ou des images par de tels réseaux, il est nécessaire de réduire le taux de pertes des paquets ainsi que le délai de transmission, afin d'assurer un confort d'écoute ou de vision suffisant au destinataire de la transmission. Cette minimisation du taux de perte de paquets et du délai de transmission se fait classiquement par la réservation de ressources internes au sein des noeuds du réseau (ou routeurs).

En pratique, et de manière résumée, le terminal qui souhaite une certaine qualité de service pour un flux déterminé, transmet une requête en qualité de service pour ce flux, avant d'envoyer les paquets correspondants.

Généralement, la requête en qualité de service est une requête en réservation de ressources, par exemple conforme au protocole RSVP (*ReSerVation Protocol*), tel que défini par le RFC 2205 de l'IETF (*Internet* Engineering Task Force).

Selon ce protocole RSVP, chaque routeur recevant une requête en réservation de ressources doit, dans un premier temps, vérifier qu'il dispose des ressources demandées et acheminer la requête selon des algorithmes de routage classique. La requête en réservation de ressources parcourt ainsi un chemin qui sera normalement celui des paquets du flux concerné, jusqu'au destinataire. Ce dernier transmet alors une réponse à l'émetteur initial qui va remonter le chemin inverse. Lors de ce second passage, chaque routeur doit effectivement réserver les ressources demandées.

Avec un tel protocole, chaque routeur doit assurer la maintenance du contexte de traitement correspondant à la requête en qualité de service pour laquelle il a été sollicité. Notamment, si un routeur du réseau traite quatre flux, il doit gérer quatre files d'attente correspondantes, une par flux.

L'architecture DiffServ (*Differentiated Services model*) telle que définie par le RFC 2475 de l'IETF offre un mécanisme de réservation de ressources différent. Ce mécanisme est basé sur un marquage de priorité des paquets des flux IP. Selon cette architecture, la gestion de la qualité de service est mise en oeuvre par l'affectation de priorités, appelées, dans ce contexte, couleurs, à chaque paquet d'un flux. Les paquets ainsi colorés doivent être traités selon leur priorité par le routeur qui les reçoit. Le routeur n'a plus à gérer de files d'attente par flux, mais une seule file d'attente. En pratique, les niveaux de priorité correspondent généralement à la nature du flux. Un trafic voix devrait avoir la précédence la plus forte, appelée "*Expedited Forwarding*" dans l'architecture Diffserv, tandis qu'un trafic Web devrait avoir la précédence la plus faible, appelée "*Best Effort*" dans l'architecture Diffserv.

En pratique, les solutions RSVP et DiffServ se complètent, en sorte que les architectures réseaux de l'état de la technique mettent généralement en oeuvre les deux protocoles simultanément, afin de tirer parti de leurs avantages respectifs.

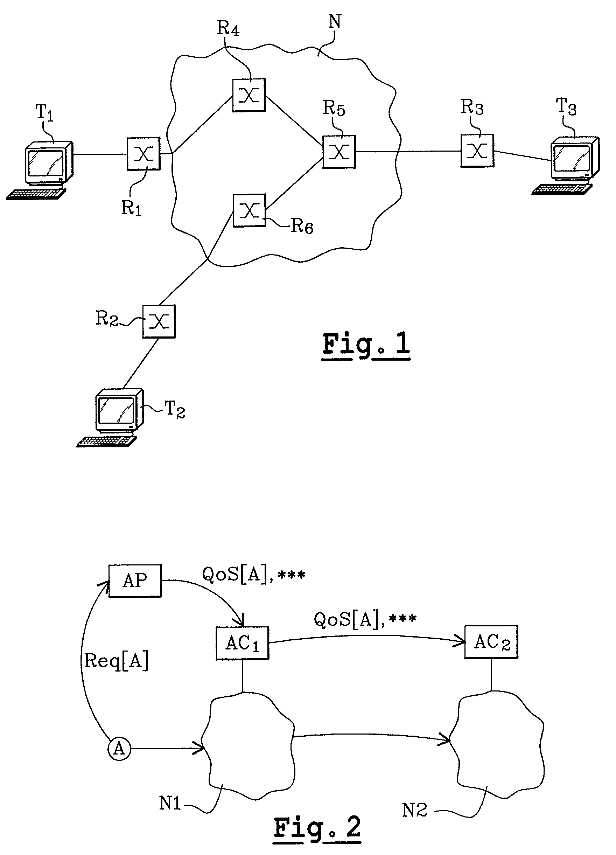

Un exemple de mise en oeuvre d'une telle architecture de l'état de la technique est représenté sur la figure 1. Une description d'un tel état de l'art peut être trouvée dans le RFC 2998 intitulé "A Framework for Integrated Services Operation over Diffserv Networks".

Le réseau de données N comporte des routeurs R₁, R₂, R₃, R₄, R₅, R₆. Certains de ces routeurs sont des routeurs frontières (Edge Routers, dans la littérature anglo-saxonne) R₁, R₂, R₃, c'est à dire qu'ils disposent de moyens de communication avec des terminaux, des applications bureautiques ou des routeurs extérieurs à ce réseau de données N. Les autres routeurs R₄, R₅, R₆ sont des routeurs internes, qui ne disposent de moyens de communication qu'avec d'autres routeurs internes du réseau de données N.

Le réseau peut comporter, outre les routeurs frontières, d'autres types d'équipements frontières. il peut par exemple s'agir de passerelles dont la fonction est de transmettre et mettre en forme des flux, sans pour autant faire de routage IP (Internet Protocol).

Selon cet état de l'art, les équipements frontières (routeurs, passerelles,...) peuvent mettre en oeuvre le protocole RSVP, tandis que les routeurs internes mettent principalement en oeuvre le mécanisme Diffserv. Mais on peut aussi avoir certains routeurs internes qui mettent en oeuvre le protocole RSVP, seul un réseau noyau mettant en oeuvre le protocole Diffserv. On peut aussi avoir des réseaux "tout" Diffserv.

Dans un réseau tel que représenté sur la figure 1, si un terminal T₁ initie un flux qui nécessite une certaine qualité de service, avec le terminal T₃, par exemple une communication vocale qui nécessite entre autres un délai de transmission minimal, il émet une requête en réservation de ressources selon le protocole RSVP. Cette requête en réservation de ressources est reçue puis traitée par l'équipement frontière R₁. Ce dernier vérifie qu'il dispose effectivement des ressources internes nécessaire (bande passante notamment) pour fournir la qualité de service demandée. Il vérifie notamment que l'agrégation actuelle des flux à sa sortie permet d'accepter ce nouveau flux.

Le cas échéant, l'équipement frontière R₁ peut transmettre une réponse au terminal T₁ lui indiquant que la réservation de ressources a été effectivement réalisée.

Le terminal T₁ transmet alors les paquets du flux vers le terminal destinataire T₃.

Conformément au mécanisme Diffserv, le routeur R₁ marque chacun des paquets du flux qu'il reçoit, avec la précédence affectée au flux, en fonction de la requête en réservation de ressources précédemment reçue. C'est le point code ("Code Point" dans la littérature anglosaxone).

Les paquets sont acheminés au sein du réseau de données N, au travers des routeurs R₁, R₄, R₅, R₆ et R₃

Le routeur R₃ transmet alors le flux de paquets au terminal T₃ et la requête en qualité de service selon le protocole RSVP est transmise à ce terminal T₃.

Plus généralement, chacun des routeurs du réseau reçoit des paquets qui peuvent correspondre à différents flux initiés dans le réseau N. Tous ces paquets sont marqués d'une précédence, selon le mécanisme Diffserv. Chaque routeur traite les paquets qu'il reçoit en fonction des précédences (comme "*Expedited Forwarding*", "*Best Effort*",...) qui leur sont affectées.

Cette solution de l'état de l'art présente un problème, puisque la vérification des ressources disponibles n'est effectuée que par les équipements frontières. Si deux requêtes en qualité de service sont par exemple initiées sur deux équipements frontières distincts, il peut en résulter, pour un routeur interne du réseau, une impossibilité de satisfaire la qualité de service demandée. Les deux requêtes en qualité de service pourront être accordées, alors qu'une ou même les deux, ne pourront être satisfaites. En outre, le nombre de niveaux de précédence qui peuvent être accordées selon le mécanisme Diffserv est limité. Ainsi, tous les flux correspondant à du trafic voix auront généralement la même précédence Diffserv, typiquement, la précédence appelée "Expedited Forwarding". Ainsi, chaque routeur traitera les paquets de type "qualité voix" avec la même précédence. Si un problème de congestion arrive sur un routeur recevant plusieurs flux de ce type, il s'en suivra la dégradation arbitraire de la qualité de service pour au moins l'un de ces flux.

Ce genre de problème est commun à l'ensemble des solutions reposant sur un contrôle d'admission effectué par les équipements de réseau eux-mêmes. C'est par exemple le cas des solutions décrites par les demandes de brevets européennes EP 0714 192 de la société IBM et EP 0398 037 de la société Toshiba.

Pour illustrer ce problème, si on revient au réseau N représenté sur la figure 1, dans le cas où le terminal T₂ initie une deuxième requête en qualité de service auprès de l'équipement frontière R_{2,} pour un nouveau flux de paquets. Cette deuxième requête fait l'objet du même traitement que la requête initiée par le terminal T₁, et est de même, destinée au terminal T₃.

Ce nouveau flux de paquets initié par le terminal T₂ suit un chemin R₂, R₆, R₅ et R₃, jusqu'au terminal T₃.

Une partie de ce chemin, R₅, R₃ est commune avec le chemin emprunté par le flux de paquets issu du terminal T₁.

Si l'on se place dans le cas d'une configuration économe du réseau, les liens R₅-R₃ auront été dimensionnés de façon à accepter un certain volume de communications simultanées, volume qui en pratique ne devrait être dépassé que dans des situations statistiquement rares.

Ainsi, si la somme des débits des deux flux de paquets initiés par les terminaux T₁ et T₂ est supérieure au débit maximum possible sur le chemin R₅-R₃, le routeur R₅ ne sera pas en mesure de satisfaire la qualité de service demandée par au moins l'un des terminaux T₁ ou T₂. Comme les deux flux se sont vus attribuer des précédences Diffserv, "Expedited Forwarding", ces deux flux de paquets seront dégradés.

Il résulte de ce mécanisme qu'il peut y avoir un écart significatif entre la qualité de service demandée par les terminaux et acceptée par le réseau et celle effectivement fournie, due à une congestion du trafic au niveau d'un noeud interne.

Une solution est d'avoir un serveur qui va mettre en oeuvre des calculs (des algorithmes) afin de déterminer les congestions au sein du réseau et d'accepter ou non une nouvelle demande de flux.

Dans la présente invention, on se place dans le cas où il existe de tels réseaux avec un serveur de ce type, apte à déterminer si l'acceptation d'un nouveau microflux pourrait entraîner une congestion sur au moins un noeud du réseau.

Le but de la présente invention est alors de déterminer quel microflux devrait être arrêté ou refusé dans le réseau, pour empêcher la congestion. Si un microflux déjà initié dans le réseau est arrêté, on libère des ressources internes, ce qui peut permettre d'accepter un nouveau microflux. Ou bien, le nouveau microflux est refusé.

Selon l'invention, un mécanisme d'affectation d'une priorité logique à chaque microflux est mis en oeuvre par l'application demandeuse de qualité de service. Cette priorité logique permet à chaque réseau concerné par le transport d'un microflux, de mettre en oeuvre une logique de préemption de microflux, dans un contrôleur d'admission associé.

De cette façon, on peut concevoir des réseaux de données de façon économe, basée sur une analyse statistique des flux à traiter, avec une gestion optimum de la qualité de service.

Plus précisément, l'invention a pour objet un système de contrôle d'admission dans un réseau possédant un certain nombre d'équipements frontières pour recevoir des microflux à transmettre dans ledit réseau, système caractérisé en ce qu'une application demandeuse de qualité de service pour la transmission d'un microflux dans le réseau comprend des moyens d'affectation d'une priorité logique au dit microflux, ledit réseau comprenant un contrôleur d'admission comportant des moyens pour recevoir une requête en qualité de service associée au dit microflux à transmettre et la priorité logique qui lui a été affectée et des moyens pour accepter ou interdire ledit microflux.

Les moyens pour accepter ledit microflux comprennent des moyens de détermination d'un ordre de préemption de microflux dans le réseau, en fonction de leur priorité logique, pour libérer des ressources internes du réseau dans le but d'assurer la qualité de service demandée par ledit microflux par préemption de microflux de priorité logique plus basse.

Dans une mise en oeuvre de l'invention, le contrôleur d'admission associé à un réseau détermine selon ses règles de préemption, le ou les microflux à préempter et en informe l'application.

Dans une autre mise en oeuvre de l'invention, le contrôleur d'admission est apte à collaborer avec ladite application, pour la détermination des flux à préempter, en lui fournissant une liste de microflux qui pourraient être préemptés.

Selon l'invention, pour chaque réseau qu'un microflux va traverser, le contrôleur d'admission associé à ce réseau est informé par le contrôleur d'admission associé au réseau précédent de la priorité logique qui a été affectée au microflux.

Ainsi, par l'utilisation d'un contrôleur d'admission selon l'invention, un nouveau microflux peut n'être admis dans le réseau que si la qualité de service demandée peut effectivement être satisfaite, en interrompant, si nécessaire, par un mécanisme préemption, un ou des microflux de paquets déjà initiés dans le réseau, affectés d'une priorité logique plus basse.

On peut ainsi éviter tout sur-approvisionnement des ressources du réseau de données, et obtenir des architectures économes, basées sur leur utilisation statistique.

L'invention et ses avantages vont être décrits de façon plus claire dans la description suivante de mises en oeuvre, en relation avec les dessins annexés dans lesquels :
- la figure 1, déjà commentée, représente une architecture réseau de l'état de la technique, mettant en oeuvre des mécanismes de réservation de ressources;
- la figure 2 illustre le principe général d'un système de contrôle d'admission selon l'invention;
- la figure 3 illustre un premier exemple de mise en oeuvre de l'invention dans un réseau d'architecture de type tout Diffserv;
- la figure 4 illustre une variante du mécanisme de contrôle d'admission pour cette architecture réseau; et
- la figure 5 illustre un deuxième exemple de mise en oeuvre de l'invention, pour une architecture réseau de type mixte RSVP/Diffserv.

La figure 2 représente de façon schématique, le principe de contrôle d'admission effectué sur un microflux A émis par un émetteur, qui peut être un terminal quelconque, une application de bureautique, un routeur externe..., à transmettre à travers un premier réseau de données N₁ et un deuxième réseau de données N₂. Chaque réseau de données N comporte un ensemble d'équipements frontières et de ressources internes (non représentées), pour transmettre le microflux.

Selon le principe général de l'invention, l'émetteur du microflux A transmet une requête de service Req[A] vers une application AP. Selon l'invention, l'application lui affecte un niveau de qualité de service et un niveau de priorité logique. Par exemple, s'agissant d'un trafic voix, émanant d'un poste identifié comme de la plus haute importance (par exemple, du Directeur d'une société), l'application AP va affecter un niveau de priorité logique très élevé, noté *** dans l'exemple.

Cette application transmet alors la requête en qualité de service QoS [A], ***, et la priorité logique qu'elle a affecté au contrôleur d'admission AC₁ du premier réseau. Si ce contrôleur d'admission comprend des moyens de détection de congestion dans le réseau N₁ et s'il a calculé qu'il va y avoir une congestion, il va soit refuser le microflux A, soit l'autoriser mais en arrêtant d'autre(s) microflux déjà initié(s) dans le réseau, mais affecté(s) d'une priorité logique inférieure. On a ainsi une libération de ressources internes par préemption de microflux, basés sur les priorités logiques associées aux microflux.

Par ailleurs, le contrôleur d'admission transmet au contrôleur d'admission Ac₂ du réseau suivant N₂, la requête en qualité de service et la priorité logique affectée au microflux.

D'une manière générale, par un système de contrôle d'admission selon l'invention, la priorité logique affectée au microflux, est transmise à chacun des contrôleurs d'admission associés aux réseaux par lesquels le microflux doit passer.

Des moyens de préemption peuvent alors être mis en oeuvre le cas échéant dans le contrôleur d'admission si ce dernier est apte à détecter si l'admission du nouveau microflux pourrait entraîner un problème dans un noeud ou plusieurs noeuds du réseau. Dans les réseaux largement dimensionnés ou d'une manière plus générale, dans les réseaux dans lesquels on est sûr qu'il ne peut y avoir de problèmes de congestion, le contrôleur d'admission va simplement transmettre au contrôleur d'admission suivant, la requête en qualité de service et la priorité logique associée au microflux.

Dans le cas d'une architecture de type Diffserv, le microflux se voit affecter (ou est déjà affecté) d'un niveau de priorité du trafic IP, appelé précédence. Par exemple, un trafic voix se voit habituellement affecter une précédence maximale, "Expedited Forwarding" et un trafic web, une précédence basse, "Best Effort".

La priorité logique affectée par le système de contrôle d'admission selon l'invention permet d'affecter à des microflux de même précédence, une priorité logique différente, qui permet la préemption d'un flux sur un autre, selon des critères logiques définis dans l'application, et non en fonction du trafic IP.

Par exemple, le niveau de priorité logique ajouté sur les microflux pourra dépendre de l'identité de l'utilisateur du terminal.

Le contrôleur d'admission selon l'invention connaît la liste des flux initiés par chacun des équipements frontières et la priorité logique qui leur a été affectée.

De par la connaissance de ces informations, le contrôleur d'admission peut déterminer si le réseau peut ou non satisfaire la nouvelle requête en qualité de service initiée par un terminal.

Dans le cas où le contrôleur d'admission effectue des calculs (met en oeuvre des algorithmes) pour déterminer si l'utilisation actuelle du réseau permet d'assurer la qualité de service demandée pour le nouveau microflux, le contrôleur d'admission recherche le cas échéant, la liste des microflux de priorité logique plus basse initiés dans le réseau.

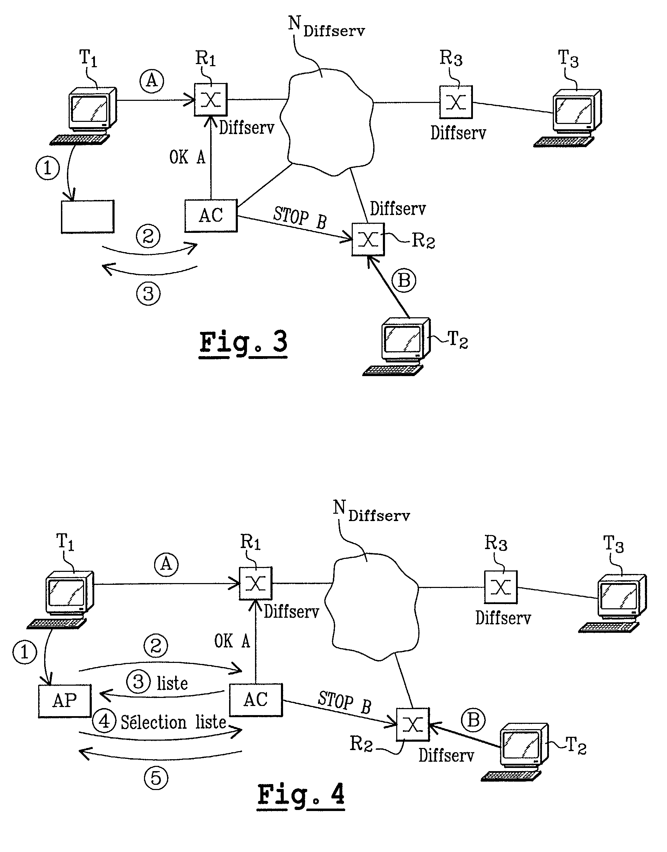

Un exemple de mise en oeuvre de l'invention, dans un réseau N d'architecture de type "tout Diffserv" est représenté sur la figure 3.

Un émetteur d'un nouveau microflux A, le terminal T₁ dans l'exemple, transmet une requête de service ① sur une application AP, qui peut être en pratique, un serveur d'appel, un SIP-proxy, une application intermédiaire, une passerelle,...Cette requête est effectuée selon un protocole adapté à l'application. Ce protocole peut typiquement être du type SIP, acronyme anglais pour "*Session Initiation Protocol*", ou encore du type H.323 de l'ITU-T (*International Telecommunication Union*).

Cette application AP peut effectuer de la mise en forme, des hypothèses, de la corrélation de plusieurs requêtes en qualité de services,...etc.

Selon l'invention, cette application affecte une priorité logique. En effet, cette application a une connaissance fine du microflux à transmettre, notamment de l'émetteur et du destinataire, et pas seulement des adresses IP. Cette application transmet alors la requête en qualité de service ② avec l'affectation d'une priorité logique, dans l'exemple, une priorité élevée notée ***, pour le flux A, au contrôleur d'admission AC.

Dans l'exemple illustré sur la figure 3, un microflux B est déjà initié dans le réseau, sur l'équipement frontière (routeur) R₂. Ce microflux a été affecté par une application (pas nécessairement par l'application AP), d'une priorité logique basse, notée *.

Deux cas de figure se présentent : dans le premier cas, le réseau a les ressources internes suffisantes pour accepter le nouveau microflux A. Soit qu'il est dimensionné de façon très large, ou que l'environnement applicatif est tel qu'il ne se pose pas de problèmes de congestion. Dans le deuxième cas, l'acceptation du microflux A entraînerait des problèmes de congestion en au moins un noeud du réseau. Et le contrôleur d'admission a des moyens de calcul qui lui permettent de détecter ce problème.

Deux variantes d'un système de contrôle selon l'invention peuvent alors être mises en oeuvre.

Dans une première variante représentée sur la figure 3, le contrôleur d'admission sélectionne dans sa liste de microflux initiés dans le réseau, un microflux de priorité moindre, B dans l'exemple, et stoppe ce microflux, en envoyant un message correspondant, Stop B, sur l'équipement frontière qui l'a initié, R₂ dans l'exemple. Il envoie un message ③ à l'application, pour lui indiquer que le flux A a été accepté, et quels flux ont été préemptés. Dans l'exemple, seul le flux B est préempté.

Le contrôleur d'admission peut alors renvoyer un message d'acceptation du microflux A sur le routeur frontière R₁ selon le protocole COPS Ce message contient les règles d'ouverture habituelles (bande passante, débits minimum et maximum) liées à la précédence du microflux, par exemple "expedited Forwarding". Le routeur R₁ peut alors transmettre le microflux A.

Dans une deuxième variante représentée sur la figure 4, le contrôleur d'admission met en oeuvre une collaboration avec l'application AP. Il envoie ③ à cette application une liste de préemptés possibles. Cette liste peut comprendre tous les microflux initiés dans le réseau avec une priorité moindre, ou seulement une partie d'entre eux, selon des règles logiques prédéterminées.

C'est l'application AP qui effectue alors le choix de préemption, et en informe ④ le contrôleur d'admission. Le contrôleur d'admission AC peut signifier ⑤ à l'application, le microflux (ou les microflux) qu'il a effectivement stoppé.

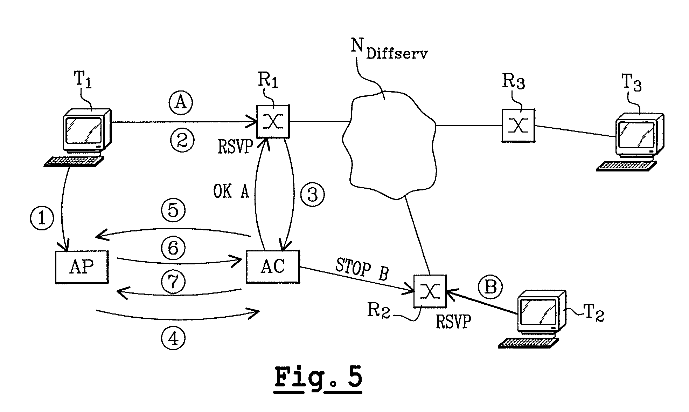

Sur la figure 5, une autre mise en oeuvre de l'invention est représentée, pour une architecture mixte RSVP/Diffserv. Dans une telle architecture, le terminal T₁ transmet ① une requête de service (protocole SIP, ou H.323) à l'application, et transmet ② une requête en réservation de ressources selon le protocole RSVP à l'équipement frontière T₁. Ce dernier transmet ③ cette requête au contrôleur d'admission AC. Par ailleurs, l'application AP affecte au microflux A une priorité logique, *** dans l'exemple, selon le mécanisme déjà détaillé en relation avec la figure 3. Il transmet ④ au contrôleur d'admission AC cette requête et la priorité logique du microflux A.

Si le contrôleur d'admission AC reçoit la requête en réservation de ressources avant de recevoir le message par l'application AP de la requête en qualité de service correspondante, il informe cette dernière de la requête en réservation de ressources ③, et attend en retour ④ la confirmation de la requête et l'affectation de la priorité.

Dans tous les cas, le contrôleur d'admission selon l'invention comprend des moyens pour vérifier que les paramètres de la requête en réservation de ressources ③ correspondent bien à ceux contenus dans la requête en qualité de service transmise ④ par l'application AP. Dans le cas où il ne correspondrait pas, le contrôleur d'admission met en oeuvre une collaboration avec l'application pour décider s'il faut accepter ou dégrader la qualité de service demandée ③ par l'équipement frontière, ce qui se traduit dans les règles d'ouvertures à appliquer.

Ensuite, si un problème de congestion est à résoudre, on retrouve les deux variantes de mise en oeuvre du système de contrôle selon l'invention, vues en relation avec la figure 3 (première variante) et la figure 4 (deuxième variante).

Dans la première variante, le contrôleur d'admission effectue le choix du ou des flux à préempter en fonction de la priorité logique des microflux déjà initiés dans le réseau, stoppe ces flux (Stop B), en informe l'application AP et envoie un message d'acceptation du microflux A à l'équipement frontière correspondant R₁.

Dans la deuxième variante illustrée sur la figure 5, le contrôleur d'admission met en oeuvre une collaboration avec l'application AP. Il envoie ⑤ à cette application une liste de préemptés possibles. Cette liste peut comprendre tous les microflux initiés dans le réseau avec une priorité moindre, ou seulement une partie d'entre eux, selon des règles logiques prédéterminées.

C'est l'application AP qui effectue alors le choix de préemption, et en informe ⑥ le contrôleur d'admission. Dans tous les cas, le contrôleur d'admission AC signifie ⑦ à l'application, le microflux (ou les microflux) qu'il a effectivement stoppé. Le contrôleur d'admission envoie alors le message d'acceptation du microflux A, OK A, avec des règles d'ouvertures correspondant à la qualité de service.

Dans une telle architecture mixte RSVP/Diffserv, le contrôleur d'admission peut mettre en oeuvre le protocole COPS avec les équipements frontières.

Avec un système de contrôle d'admission selon l'invention, le réseau peut accepter un microflux exigeant un certain niveau de qualité de service (bande passante, débits) et la satisfaire en permettant la libération de ressources internes du réseau en préemptant des microflux selon des critères donnés. Par exemple, une requête en qualité de service pour un trafic Voix émanant d'un émetteur correspondant à un client important pourra bénéficier d'une priorité plus élevée qu'une requête en qualité de service émanant d'un tiers.

C'est l'application qui met en oeuvre les règles d'affectation des priorités logiques. Ces règles sont basées sur l'intelligence du service dans l'application.

Dans le cas où le contrôleur d'admission d'un réseau n'a pas les moyens de détecter un problème de congestion, ou qu'on sait qu'il n'y a pas de problèmes de congestion possibles dans le réseau, le contrôleur d'admission assure la transmission de la priorité logique affectée par l'application au microflux qui traverse le réseau.

## Revendications

1. Système de contrôle d'admission dans un réseau (N₁) possédant un certain nombre d'équipements frontières (R₁, R₂) pour recevoir des microflux à transmettre dans ledit réseau, système **caractérisé en ce qu'**une application demandeuse de qualité de service (AP) pour la transmission d'un microflux (A) dans le réseau comprend des moyens d'affectation d'une priorité logique (***) au dit microflux, ledit réseau comprenant un contrôleur d'admission (AC₁) comportant des moyens pour recevoir une requête en qualité de service associée au dit microflux à transmettre et la priorité logique qui lui a été affectée et des moyens pour accepter ou interdire ledit microflux.

2. Système de contrôle selon la revendication 1, **caractérisé en ce que** les moyens pour accepter ledit microflux (A) comprennent des moyens de détermination d'un ordre de préemption de microflux dans le réseau, en fonction de leur priorité logique, pour libérer des ressources internes du réseau dans le but d'assurer la qualité de service demandée par ledit microflux (A) par préemption de microflux de priorité logique plus basse.

3. Système selon la revendication 1 ou 2, **caractérisé en ce que** le contrôleur d'admission (AC₁) d'un réseau est apte à émettre des messages d'acceptation, d'interdiction ou d'arrêt de microflux vers un équipement frontière correspondant dudit réseau conformément au protocole COPS.

4. Système selon l'une quelconque des revendications 1 à 3 précédentes, **caractérisé en ce que** les moyens de détermination de préemption sont aptes à transmettre à l'application demandeuse de qualité de service (AP), une liste de flux initiés dans le réseau et affectés d'une priorité logique plus basse, et à recevoir de ladite application une sélection d'un microflux ou de microflux à préempter.

5. Système selon l'une quelconque des revendications précédentes, **caractérisé en ce que** les moyens de détermination de préemption sont aptes à transmettre à l'application (AP) demandeuse de qualité de service une information indiquant le ou les microflux pré-emptés.

6. Système de contrôle d'admission, selon l'une quelconque des revendications précédentes, appliqué à un réseau comportant des équipements frontières mettant en oeuvre le protocole RSVP, **caractérisé en ce que** le contrôleur d'admission (AC₁) est apte à recevoir une requête en réservation de ressources desdits équipements frontières.

7. Système selon la revendication 6, **caractérisé en ce que** le contrôleur d'admission est apte à recevoir d'un équipement frontière une requête en réservation de ressources associée à un microflux, et **en ce que** le contrôleur d'admission comprend des moyens aptes à informer l'application demandeuse de qualité de service (AP) de la réception d'une telle requête.

8. Système selon l'une quelconque des revendications précédentes, **caractérisé en ce que** le contrôleur d'admission (AC₁) associé à un réseau (N₁) comprend des moyens pour informer un contrôleur d'admission (AC₂) associé à un autre réseau (N₂), de la priorité logique affectée à un microflux.
